(19) Europäisches Patentamt / European Patent Office / Office européen des brevets

(11) **EP 2 175 385 B1**

(12) **EUROPEAN PATENT SPECIFICATION**

(45) Date of publication and mention
of the grant of the patent:
**13.11.2019 Bulletin 2019/46**

(21) Application number: **09252211.9**

(22) Date of filing: **17.09.2009**

(51) Int Cl.:
***G06F 16/29*** *(2019.01)*

(54) **Spatial index for locating geographic data parcels stored on physical storage media**

Räumlicher Index zum Lokalisieren von geografischen Datenpaketen, die auf physikalischen Speichermedien gespeichert sind

Indice spatial pour la localisation de parcelles de données géographiques stockées sur un support de stockage physique

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **01.10.2008 US 243186**

(43) Date of publication of application:
**14.04.2010 Bulletin 2010/15**

(73) Proprietor: **HERE Global B.V.
5611 ZT Eindhoven (NL)**

(72) Inventor: **Fernekes, Robert P.
Lakemoor, Illinois 60051 (US)**

(74) Representative: **Potter Clarkson
The Belgrave Centre
Talbot Street
Nottingham NG1 5GG (GB)**

(56) References cited:
**EP-A- 1 473 543**

## Description

FIELD

The present invention relates generally to geographic databases for advanced driver assistance systems (ADAS), and more particularly, relates to locating geographic data parcels stored on a physical storage media for use by the advanced driver assistance systems.

BACKGROUND

ADAS was developed to improve the comfort, efficiency, safety, and overall satisfaction of driving. Examples of these advanced driver assistance systems include adaptive headlight aiming, adaptive cruise control, lane departure warning and control, curve warning, speed limit notification, hazard warning, predictive cruise control, and adaptive shift control, as well as others. Some of these advanced driver assistance systems use a variety of sensor mechanisms in the vehicle to determine the current state of the vehicle and the current state of the roadway in front of the vehicle. These sensor mechanisms may include radar, infrared, ultrasonic, and vision-oriented sensors, such as digital video cameras and lidar.

Some advanced driver assistance systems also use digital map data. These systems are sometimes referred to as map-enhanced ADAS. Digital map data can be used in advanced driver assistance systems to provide information about the road network, road geometry, road conditions, and other items associated with the road and terrain around the vehicle. Unlike some sensors, digital map data is not affected by environmental conditions, such as fog, rain, or snow. In addition, digital map data can provide useful information that cannot reliably be provided by cameras or radar, such as curvature, grade, bank, speed limits that are not indicated by signage, traffic and lane restrictions, and so on. Further, digital map data can provide a predictive capability well beyond the range of other sensors or even beyond the driver's vision to determine the road ahead of the vehicle, around corners, over hills, or beyond obstructions. Accordingly, digital map data can be a useful addition for some advanced driver assistance systems.

The map-enhanced advanced driver assistance systems commonly use data from a geographic database associated with a navigation system in a vehicle. The navigation system database contains data that represents the road network in the region, such as the locations (geographic coordinates, including altitude) of roads and intersections, road names, speed limits along roads, turn restrictions at intersections, addresses or address ranges along roads, the number of lanes each road has, lane width, lane markings, functional classes of roads, the locations of medians, and so on. The navigation system database may also contain information about other geographic features, such as bodies of water, parks, administrative areas (including municipal, state and country boundaries), and locations of points of interest, such as businesses, hospitals, police stations, and so on.

The navigation system database has much more data than an advanced driver assistance system needs. Additionally, a geographic database designed for navigation may not have all the data and/or may not have data with the accuracy levels needed by an advanced driver assistance system. As a result, there has been some effort in designing a geographic database specifically for advanced driver assistance systems. For example, U.S. Patent Publication No. 2006/0100780 describes a geographic database having a data storage format designed for a sensor device in a motor vehicle system.

Because a geographic database designed specifically for ADAS contains less data than a navigation system database, less memory is needed to store the ADAS database. For example, instead of storing the geographic database on a CD, the database can be stored on a memory chip. Other efficiencies may also be realized. For example, the manner in which data needed by an advanced driver assistance system is retrieved from physical storage media may be changed to improve the efficiency of data retrieval.

SUMMARY

According to an aspect of the invention, there is provided a system according to claim 1. According to another aspect of the invention, there is provided a method according to claim 8. Further aspects are defined by the dependent claims.

In one example, a method and system for locating geographic data stored in parcels on physical storage media is disclosed. The geographic data is located in a geographic database that is organized by parcels of one or more tiles bounded by lines of constant latitude or longitude in a world tile grid. Each tile is assigned a tile ID. A map access application receives a request for geographic data. The request includes information that the map access application can use to obtain the tile ID for the tile associated with the requested geographic data. The information may be geographic coordinates of a current vehicle position as determined by a positioning system. The information may also be a segment or node identification.

After obtaining the tile ID, the map access application identifies a row and a column associated with the tile and uses a spatial index organized as a sparse two dimensional array to identify a media address of the parcel that contains the requested data. The map access application uses the media address to access and read the parcel from the physical storage media. The map access application then provides access to the parcel of geographic data so that the driver assistance application can receive the geographic data.

These as well as other aspects and advantages will become apparent to those of ordinary skill in the art by reading the following detailed description, with reference where appropriate to the accompanying drawings. Further, it is understood that this summary is merely an example and is not intended to limit the scope of the invention as claimed.

BRIEF DESCRIPTION OF THE DRAWINGS

Presently preferred embodiments are described below in conjunction with the appended drawing figures, wherein like reference numerals refer to like elements in the various figures, and wherein:

Figure 1 is a block diagram of map-enhanced ADAS architecture, according to an example;

Figure 2 is a block diagram of software applications available to a processor depicted in Figure 1, according to an example;

Figure 3 is a block diagram of data attributes for road segment data records in a geographical database depicted in Figure 1, according to an example;

Figure 4 is a diagram depicting a world map segmented into tiles, according to an example;

Figure 5 is a block diagram showing how the tiles depicted in Figure 5 are parcelized, according to an example;

Figure 6 is a flow chart showing how a spatial index is used to locate the parcels depicted in Figure 5 on physical storage media, according to an example; and

Figure 7 is a block diagram of the spatial index depicted in Figure 6, according to an example.

DETAILED DESCRIPTION

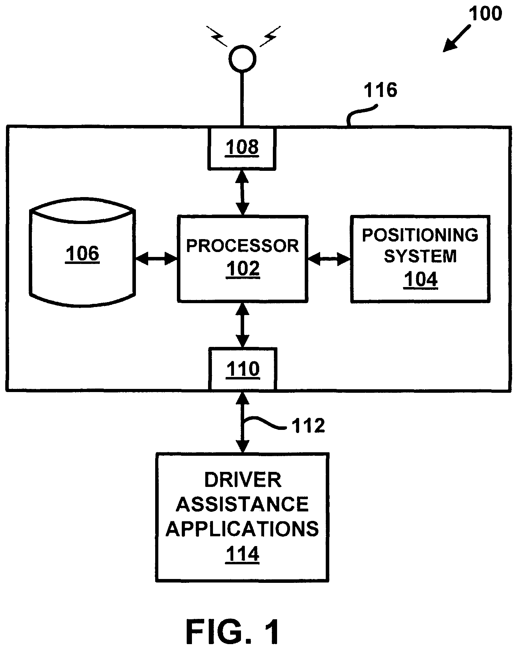

Figure 1 is a block diagram of map-enhanced ADAS architecture 100. In this example, the map-enhanced ADAS architecture 100 includes driver assistance applications 114, and a map and positioning engine (MPE) 116. The MPE 116 is shown in Figure 1 as a standalone module; however, it is understood that the MPE 116 may be distributed into multiple packages and/or integrated into other device packages, such as a sensor package. The MPE 116 includes a processor 102, a positioning system 104, a geographic database 106, a communication system 108, and an in-vehicle data bus interface 110. The MPE 116 may also include other hardware, software, and/or firmware, such as memory and a power source.

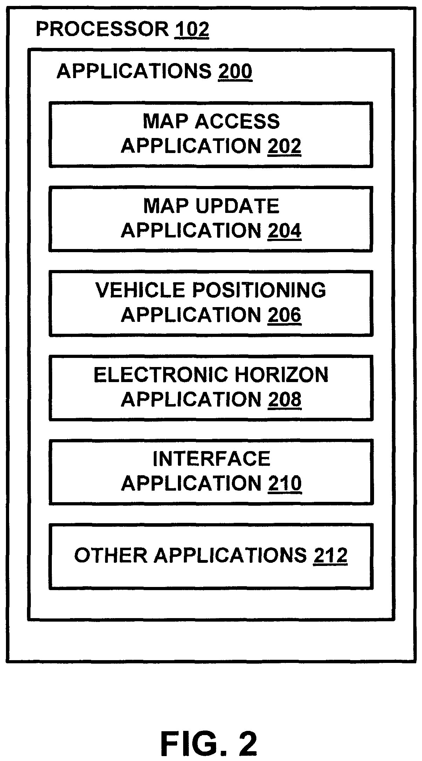

The processor 102 may be any type of processor, controller, or other computing device. For example, the processor 102 may be a digital signal processor. The processor 102 receives inputs from the positioning system 104, the geographic database 106, the communication system 108, the in-vehicle data bus interface 110, and other sources. The processor 102 then processes the inputs using application software programs 200, some of which are described with reference to Figure 2.

The processor 102 then provides outputs to driver assistance applications 114 via the in-vehicle data bus interface 110 and a data bus 112. Preferably, the in-vehicle data bus interface 110 and the data bus 112 are a Controller-Area Network (CAN) interface and a CAN-bus, which are designed for automotive applications. The driver assistance applications 114 may include adaptive headlight aiming, adaptive cruise control, obstruction detection, obstruction avoidance, collision avoidance, adaptive shift control, and others.

The positioning system 104 may utilize GPS-type technology, a dead reckoning-type system, or combinations of these or other systems, all of which are known in the art. The positioning system 104 may also include suitable sensing devices that measure the traveling distance speed, direction, orientation, and so on. For example, the positioning system 104 may include a GPS system and a gyroscope. The positioning system 104 provides an output signal to the processor 102. Some of the application software programs 200 that run on the processor 102 use the output signal from the positioning system 104 to determine the location, direction, orientation, etc., of the MPE 116.

The geographic database 106 is designed for ADAS applications. Like a navigation system geographic database, the geographic database 106 contains data about roads and intersections in a geographic region. For example, the geographic database 106 contains at least one database record (also referred to as "entity" or "entry") for each road segment. The road segment data record includes a segment identification (ID) by which the data record can be identified in the geographic database 106.

The road segment data record also includes data providing the geographic coordinates (e.g., the latitude, longitude, altitude) of the endpoints of the represented road segment and data providing the shape of the road segment. In one embodiment, the endpoint data references node data records that represent the nodes corresponding to the endpoints of the represented road segment. Like the segment ID, the node data records includes a node ID by which the data record can be identified in the geographic database 106.

The geographic database 106 may include higher quality (i.e., more accurate) data than the data typically contained in a navigation system geographic database. For example, with respect to road geometry, the data in the geographic database 106 may be more accurate with respect to longitude, latitude, and/or altitude. Also, the starting and stopping locations of tunnels may be more accurately specified in the geographic database 106. Further, the data in the geographic database 106 may be more accurate with respect to derived information, such as curvature.

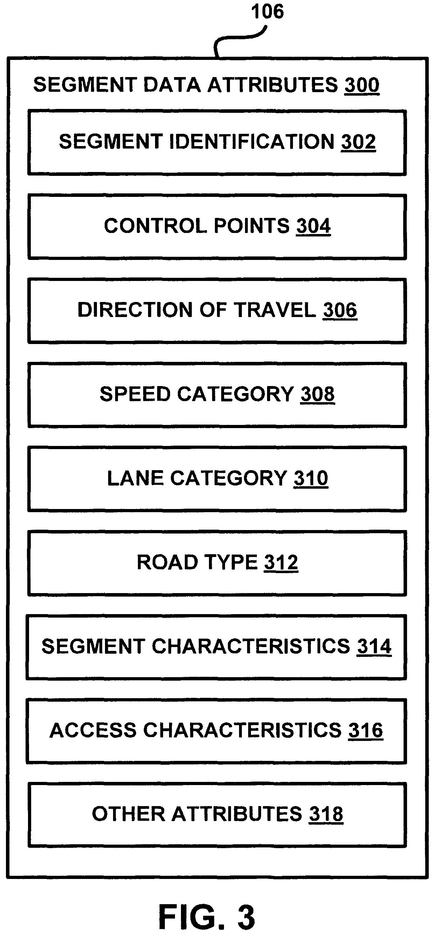

The geographic database 106 may also include more kinds of data (e.g., more kinds of attributes) than the data typically contained in a navigation system geographic database. For example, the geographic database 106 may include data about road objects, such as signs and crosswalks, including their positions along a road segment, sign object type, and sign text. Some of the data attributes found in the geographic database 106 are described with reference to Figure 3.

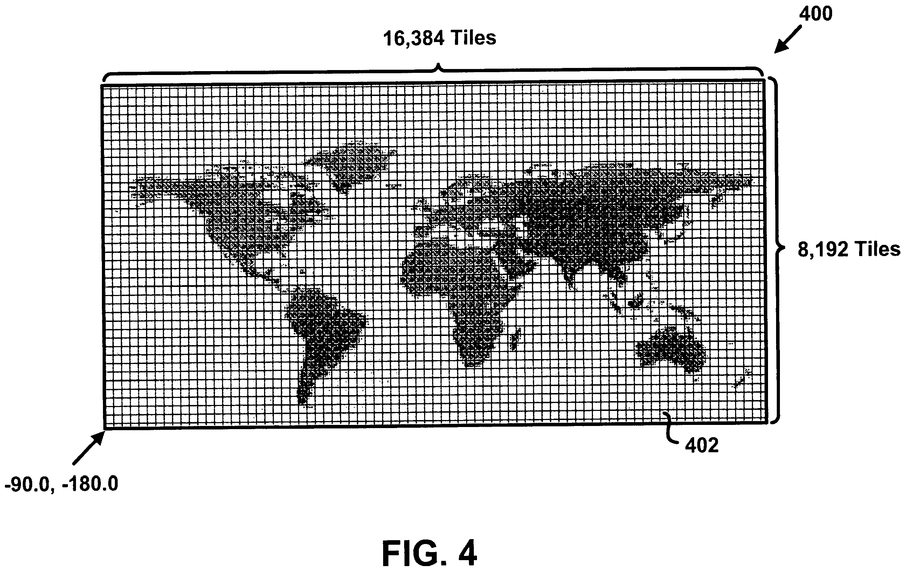

The geographic database 106 is organized into parcels. A parcel is a grouping of one or more tiles, which are described with reference to Figure 4. A parcel is the smallest unit of the geographic database 106 that can be replaced or updated. The geographic database 106 may be updated on a regular basis using the communications system 108. A portion of the geographic database 106 may be updated independently of other portions. The geographic database 106 may be updated by receiving new parcels that either add additional coverage to the geographic database 106 or replace existing parcels via the communications system 108. The communications system 108 preferably receives the new parcels over a wireless communications link. Any wireless communications system, including cellular, PCS, satellite, FM, radio, or technologies that may be developed in the future, may be used to transmit the new or updated parcels to the communications system 108.

Figure 2 is a block diagram depicting some of the software applications 200 available to the processor 102. The software applications 200 depicted in Figure 2, include a map access application 202, a map update application 204, a vehicle positioning application 206, an electronic horizon application 208, and an interface application 210. As this is not an exhaustive list of all the software applications 200 available to the processor 102, Figure 2 also depicts other applications 212, which may include a startup routine, self-test diagnostics, and so on.

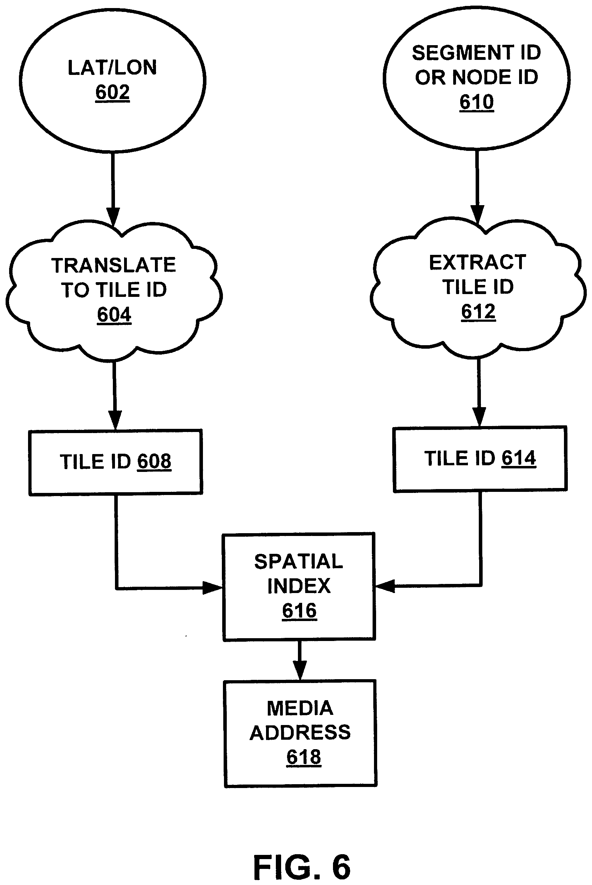

The map access application 202 provides data access to the geographic database 106 stored on physical storage media. The map access application 202 receives a request for data from the processor 102 and locates data responsive to the request on the physical storage media. As described with respect to Figures 6-7, the map access application 202 uses a spatial index to identify and read the requested data. The map access application 202 preferably provides an application programming interface (API) for use by the processor 102 and/or other applications 200.

The map update application 204 facilitates updates to the geographic database 106. The communications system 108 receives one or more parcels that either add additional coverage to an existing database or replace existing parcels. For new parcels, the map update application 204 stores the parcel on the physical storage media. For existing parcels, the map update application 204 replaces the old parcel with the new parcel on the physical storage media.

The vehicle positioning application 206 determines the vehicle's position relative to a road network that is represented by data included in the geographic database 106. The vehicle positioning application 206 uses the output from the positioning system 104 and matches the output to data in the geographic database 106 using a vehicle positioning algorithm, which is sometimes referred to as a map matching algorithm. The vehicle positioning application 206 may use any vehicle positioning algorithm currently known or developed in the future.

The electronic horizon application 208 determines an electronic horizon. An electronic horizon is a collection of roads and intersections leading out from the current vehicle position to an extent determined by the electronic horizon application 208. The collection of roads and intersections are potential paths that the vehicle may follow from the current vehicle position. The electronic horizon application 208 determines extent using one or more costing functions. The costing functions are based on the needs of the driver assistance applications 114 and may take into consideration various factors, such as vehicle speed, travel time, and driving distance. An example electronic horizon application is described in U.S. Patent No. 6,405,128, which is assigned to the same assignee as the current application and is hereby incorporated by reference in its entirety.

The interface application 210 controls communications between the MPE 116 and the driver assistance applications 114 via the interface 110 and the bus 112. Preferably, the interface application 210 is based on the CAN protocol, which is a serial communication protocol for communicating between various electronic devices in the vehicle. In accordance with the CAN protocol, the various electronic devices in the vehicle can be coupled to a single serial bus (e.g., the bus 112) such that messages and data can be sent from one electronic device in the vehicle to another. The CAN protocol is a message based protocol in which CAN frames are placed on a common CAN bus. The CAN bus may be a single wire or may be a differentially driven pair of wires.

Figure 3 is a block diagram of some of the data attributes 300 for road segment data records found in the geographic database 106. The data attributes depicted in Figure 3 include segment identification 302, control points 304, direction of travel 306, speed category 308, lane category 310, road type 312, segment characteristics 314, and access characteristics 316. As this is not an exhaustive list of all the data attributes for the road segment data records, Figure 3 also depicts other attributes 318. For example, the segment data attributes 300 may also include references to node data records in the form of a node ID corresponding to endpoints of the segment.

As described previously, the road segment data record includes a segment ID 302 by which the data record can be identified in the geographic database 106. The control point attributes 304 contain bit flags that provide additional information regarding control points to aid in the creation of curvature, heading, and slope profiles from spline data. For example, the control point attributes 304 may include a byte-size flag per control point. One of the bits in the flag is assigned to curvature, while another of the bits is assigned to slope. If the curvature bit flag is set to one, then the control point is marked as part of the curvature profile. Similarly, if the slope bit flag is set to one, then the control point is marked as part of the slope profile.

The direction of travel attribute 306 represents the allowed direction of traffic flow on a segment. For example, the segment may represent a portion of a road network in which travel is permitted in both directions. Alternatively, the segment may represent a portion of a road network allowing only one-way travel. The direction of travel attribute 306 identifies whether the segment allows bi-directional travel or unidirectional travel, and if unidirectional, the direction of travel attribute 306 also identifies the allowed direction of travel.

The speed category attribute 308 represents the general speed trend of a road based on posted or implied speed limit. The speed category attribute 308 contains data associated with a speed range. For example, the speed category attribute 308 may include a data representation of the integer 1 for speeds exceeding 80 mph, the integer 2 for speeds in the range of 65-80mph, the integer 3 for speeds in the range of 55-64 mph, and so on until the speed range includes 0 mph.

The lane category attribute 310 represents the predominant number of lanes on a segment in one direction of travel. Preferably, the lane category attribute 310 does not include turn lanes. If the number of lanes is different for each direction, the lane category attribute 310 may represent the higher number.

The road type attribute 312 represents the type of road the segment represents. For example, the road type attribute 312 may contain data associated with an interstate highway, a controlled access highway, a ramp, a pedestrian walkway, and so on.

The segment characteristic attribute 314 contains bit flags that describe various characteristics of the segment. For example, the segment characteristic attribute 314 may identify whether a segment is paved, a ramp, a bridge, a tunnel, a roundabout, and so on.

The access characteristic attribute 316 contains bit flags that define the types of traffic allowed on the segment. For example, the access characteristic attribute 316 may identify whether cars, buses, trucks, taxis, emergency vehicles, pedestrians, and so on are allowed on the segment.

Figure 4 depicts a world map 400 segmented into tiles 402. The tiles are bounded by lines of constant latitude or longitude. The size in longitude and latitude direction is preferably equal in terms of World Geodetic System 1984 (WGS 84) coordinate units. However, other coordinate systems for the earth now known or developed in the future may be used. Beneficially, the WGS 84 coordinate system uniquely identifies every point (x, y; where x corresponds to longitude and y corresponds to latitude) on the earth's surface except the North and South Poles.

The world tile grid 400 consists of 8,192 ($2^{13}$) rows and 16,384 ($2^{14}$) columns with row 0 located at -90 degrees latitude and column 0 located at -180 degrees longitude. Each of the tiles 402 is assigned a tile ID. Preferably, the tile ID is a sequential number starting from zero, in row order, west to east, then south to north.

With WGS 84, the area coverage per tile 402 depends on the latitude. Each of the tiles 402 has a height of approximately 2.44 km. The width of the tile 402 varies based on the latitude and ranges from approximately 2.44 km at the equator down to approximately 424 meters at $\pm$80 degrees latitude.

In order to provide a unique allocation of coordinates to the tiles 402, tile borderlines are assigned to tiles. In one example, each of the tiles 402 contains its western and southern borderline, while the eastern and northern border lines are part of a neighboring tile. Thus, if $(x_1, y_1)$ is the southwest corner of a tile and $(x_2, y_2)$ is the tile's northeast corner, then all points (x, y) with $x_1 \leq x < x_2$ and $y_1 \leq y < y_2$ are uniquely assigned to that tile. Of course, other mechanisms for assigning borderlines may also be used.

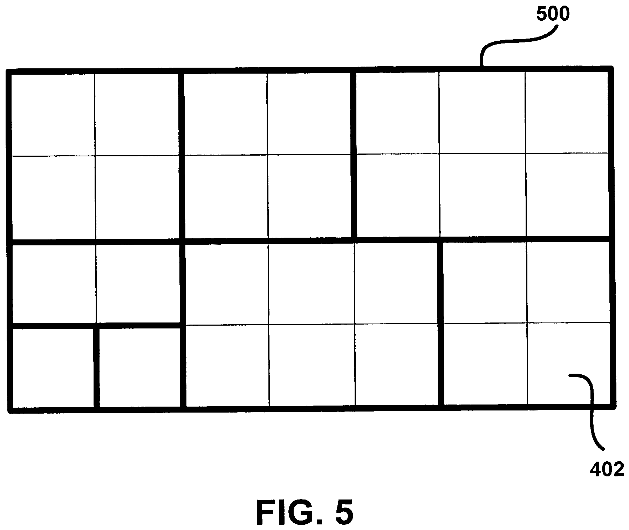

Figure 5 is a block diagram shows how the tiles 402 depicted in Figure 4 are grouped into parcels 500 (denoted by the darker lines). The geographic database 106 is organized as a collection of parcels 500, each of which contains the data for one or more tiles 402. The data in the geographic database 106 is stored on the physical storage media by parcel. The parcels 500 can be spatial parcels, representing map data for a single geographic area, including position coordinates. The parcels 500 can also be non-spatial, representing a particular type of data (e.g., an index). Each parcel 500 begins with a header specifying the type and size of the parcel, and any parameters specific to that parcel.

Parcelization is the process of dividing the geographic database 106 into spatial parcels. The parcel boundaries are defined based on the world tile grid 400 described with respect to Figure 4. The parcel 500 can be defined as a single tile 402 or a rectangular group (including square groups) of tiles 402. The number of tiles 402 contained in the parcel 500 is determined by a compiler based on a target parcel size. For example, Figure 5 depicts twenty-eight tiles 402 grouped into eight parcels 500 of various sizes. After parcelization, the parcels are stored on the physical storage media. Preferably, the physical storage media is flash memory; however, any suitable memory type may be used to store the geographic database 106.

Figure 6 is a flow chart depicting how a spatial index 616 is used to locate the parcels 500 on the physical storage media. The spatial index 616 locates a spatial parcel 500 on the physical storage media using a tile ID 608, 614. The spatial index 616 receives the tile ID 608, 614 after the map access application 202 receives a request for geographic data from the processor 102.

The request for geographic data may include data regarding the vehicle's current location. The data regarding the vehicle's current location may be in the form of geographic coordinates 602 (i.e., latitude/longitude) of the vehicle's position based on data from the positioning system 104. Alternatively, the data regarding the vehicle's current location may be in the form of a segment ID and/or a node ID 610 currently associated with the vehicle's position based on data from the vehicle positioning application 206. Alternatively, the request for geographic data may include a segment ID and/or a node ID 610 without reference to the vehicle's current position.

If the map access application 202 receives the geographic coordinates 602 of the vehicle, the map access application 202 translates 604 the geographic coordinates 602 into the tile ID 608. For example, the map access application 202 may compute the tile ID 608 from the latitude and longitude as follows:

$$row = (latitude + 2^{30}) >> 18$$

$$col = (longitude + 2^{31}) >> 18$$

$$tile\ ID = (row << 14) + col.$$

where >> and << are standard C bit shift operations.

If the map access application 202 receives the segment ID and/or node ID 610, the map access application 202 extracts 612 the tile ID 614. The tile ID 614 is embedded in the geographic database ID. The map access application 202 uses the segment ID and/or the node ID 610 to obtain the tile ID 614 from the geographic database ID.

Once the tile ID 608, 614 has been obtained either by translation 604 or extraction 612, the map access application 202 identifies the parcel's media address 618 using the spatial index 616. Each entry in the spatial index 616 is the media address 618 of the parcel 500 containing the corresponding tile 402. The row and column number of the tile 402 can be obtained from the tile ID 608, 614 as follows:

$$row = tile\ ID >> 14$$

$$col = tile\ ID\ \&\ 0x3FFF.$$

Beneficially, the spatial index 616 uses the tile ID, rather than a parcel ID, to obtain the media address 618. Using the tile ID allows the spatial index 616 to be a two-dimensional array indexed by a tile's row and column in the world tile grid 400. As a result, the spatial index 616 design is simpler than an index using parcel IDs, which is typically a tree index (e.g., a kd-tree index).

The media address 618 is used to access and read the parcel 500 from the physical storage media. In one example, the media address 618 includes a Media Table of Contents (MTOC) index, a parcel offset (e.g., in sectors) from the address specified in the MTOC for that entry, and a parcel size (e.g., in sectors). Various types of physical storage media have different logical sector sizes. Typically, one logical sector is the smallest amount of data that can be read.

The MTOC index identifies and locates components contained in the geographic database 106. The MTOC index is used to access an appropriate MTOC entry (e.g., component type, offset from beginning of file, size of component, and component filename). The information in the MTOC combined with a parcel offset in the media address 618 may be used to read the parcel 500 from the physical storage media. Because the media address 618 is relative to an entry in the MTOC, the order of parcels on the physical storage media can be changed and new parcels can be added without affecting existing software.

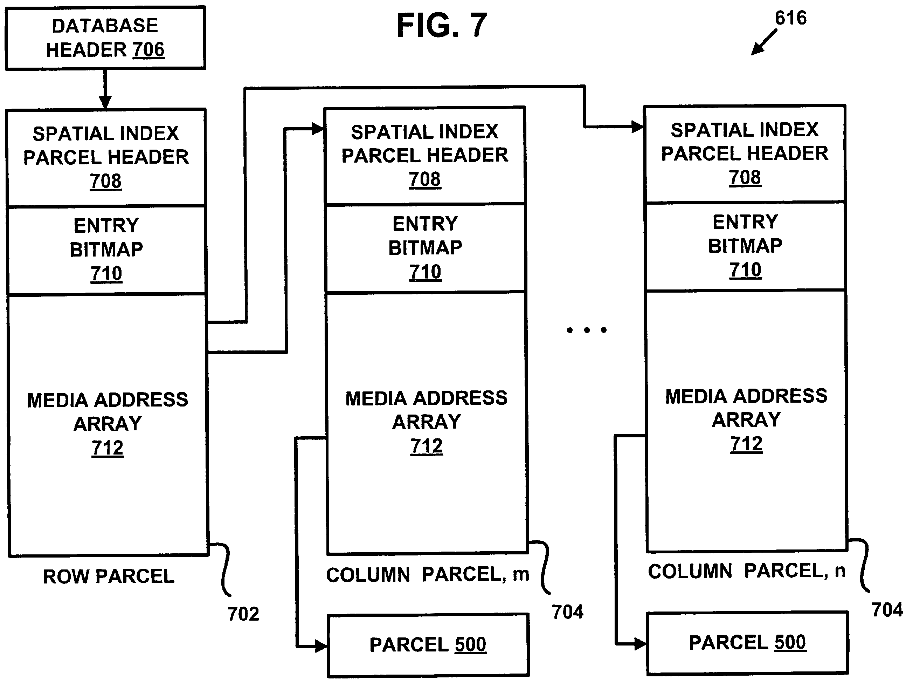

Figure 7 is a block diagram of the spatial index 616 depicted in Figure 6. The spatial index 616 is organized as a sparse two dimensional array indexed by the tile's row and column numbers. As described above, because the spatial index 616 uses the tile ID and not the parcel ID, the spatial index 616 does not need to use a more complicated tree index. However, unlike parcels, which are typically uniformly filled, the tiles 402 are not uniformly filled and many tiles contain no geographic data at all (e.g., oceans, farm fields, rural areas). To reduce the amount of space needed to store the spatial index 616 on the physical storage media, the spatial index 616 is designed as a sparse array. A sparse array is an array in which most of the elements have the same value referred to as the default value, which is typically "0" or null.

The spatial index 616 consists of a single row parcel 702 followed by one or more column parcels 704. In another example, the spatial index 616 may consist of a single column parcel followed by one or more row parcels. In yet another example, a single row parcel and/or a single column parcel may be stored in multiple parcels, for example, due to size constraints. In yet another example, multiple row and/or column indexes may be stored in a single parcel.

The geographic database 106 has a database header 706 that contains information and parameters that describe the database 106. The database header 706 includes the media address of the spatial index's row parcel 702.

Each spatial index parcel 702, 704 contains a spatial index parcel header 708, followed by an array of bit flags 710 that indicate the presence of a media address entry, followed by an array of media addresses 712. The spatial index parcel header 708 includes the type of spatial index parcel (i.e., row or column), the starting and ending index values for entries in the row or column, the number of bitmap fields in the array of bit flags 710, the number of media address entries in the array of media addresses 712, and offset values from the start of the header 708 to the arrays 710, 712. The spatial index parcel header 708 may include additional information as well.

The array of bit flags 710 includes a series of bitmap fields that indicate the presence or absence of a media address entry in the array of media addresses 712. Preferably, each of the bitmap fields is four bytes. The most significant bit of the first bitmap field corresponds to the starting index value specified in the spatial index parcel header 708. The remaining bits in the bitmap fields represent the corresponding media address entries in sequential order through the end index value specified in the spatial index parcel header 708.

After identifying the row entry for the tile corresponding to the tile ID in the media address array 712 of the row parcel 702, the spatial index 616 identifies the media address of the spatial index's column parcel 704. After identifying the column entry for the tile corresponding to the tile ID in the media address array 712 of the column parcel 704, the spatial index 616 identifies the media address 618 of the parcel 500 containing the tile 402 corresponding to the tile ID 608, 614.

The index of an entry in the media address array 712 that corresponds to a requested row or column index is the sum of the non-zero bits in the array of bit flags 710 that precede the bit for the requested index (requested index - start index).

While Figure 7 depicts one example configuration of the spatial index 616, it is understood that other sparse array designs may be used. By using a sparse array, the amount of space needed to store the spatial index 616 on the physical storage media is reduced. Additionally, retrieval of data needed by an advanced driver assistance system from the physical storage media is more efficient.

It is intended that the foregoing detailed description be regarded as illustrative rather than limiting and that it is understood that the following claims including all equivalents are intended to define the scope of the invention. For example, while the geographic database 106 was described as an ADAS database, other databases may also benefit from a spatial index that is organized as a sparse array to locate data on a physical storage media. The claims should not be read as limited to the described order or elements unless stated to that effect. Therefore, all embodiments that come within the scope and spirit of the following claims and equivalents thereto are claimed as the invention.

**Claims**

1. A system for locating geographic data sorted in parcels on physical storage media, wherein the geographic data is located in a geographic database that is organized by parcels of one or more tiles bounded by lines of constant latitude or constant longitude in a world tile grid segmenting a world map into tiles of constant latitude or constant longitude, wherein the geographic database is organized as a collection of parcels such that the data in the geographic database is stored on the physical storage media by parcel, wherein each parcel has a parcel boundary defined based on the world tile grid, and wherein each parcel contains the data for one or more tiles in the world tile grid,
the system comprising:

   a software application configured to receive a request for geographic data, wherein the request includes information that the software application uses to identify a tile in the world tile grid that contains the requested geographic data and to obtain a tile identification of this tile;
   a spatial index organized as a two-dimensional sparse array indexed by a tile's row and column in the world tile grid wherein each entry in the spatial index is a media address of the parcel containing the corresponding tile,
   wherein the software application is configured to provide the tile identification to the spatial index and the spatial index is configured to use the tile identification to identify a row and a column associated with the tile,
   and wherein the spatial index is configured to use the row and the column to identify a parcel location at the corresponding media address on the physical storage media that contains the requested geographic data contained in the corresponding required tile.

2. The system of claim 1, wherein the information that the software application uses to identify the tile includes data associated with a current position of a vehicle.

3. The system of claim 2, wherein the data associated with the current position of the vehicle includes geographic coordinates of the vehicle's position.

4. The system of claim 2, wherein the data associated with the current position of the vehicle includes at least one of a segment identification and a node identification.

5. The system of claim 1, wherein the information that the software application uses to identify the tile includes at least one of a segment identification and a node identification.

6. The system of claim 1, wherein the spatial index includes a single row parcel and at least one column parcel.

7. The system of claim 6, wherein the row parcel and the at least one column parcel includes a header, a first array, and a second array, wherein the first array indicates presence of entries in the second array.

8. A method for locating geographic data stored in parcels on physical storage media, the method being performed by a software application, wherein the geographic data is located in a geographic database that is organized by parcels of one or more tiles bounded by lines of constant latitude or constant longitude in a world tile grid segmenting a world map into tiles of constant latitude or constant longitude, wherein the geographic database is organized as a collection of parcels such that the data in the geographic database is stored on the physical storage media by parcel, wherein each parcel has a parcel boundary defined based on the world tile grid, and wherein each parcel contains the data for one or more tiles in the world tile grid, the method comprising:

receiving a request for geographic data, wherein the request includes information identifying a tile in the world tile grid that contains the requested geographic data;
identifying a tile that contains the requested geographic data and obtaining a tile identification of this tile, wherein the tile identification is associated with the row and the column of the required tile in the world tile grid; and
retrieving a media address for a parcel containing the corresponding tile using a spatial index organized as a two-dimensional sparse array indexed by the tile's row and column in the world tile grid, wherein the row and column associated with the required tile are obtained from the tile identification.

9. The method of claim 8, wherein the request includes data associated with a current position of a vehicle.

10. The method of claim 9, wherein the data associated with the current position of the vehicle includes geographic coordinates of the vehicle's position.

11. The method of claim 10, wherein identifying the tile includes translating the geographic coordinates of the vehicle's position to obtain the tile identification.

12. The method of claim 9, wherein the data associated with the current position of the vehicle includes at least one of a segment identification and a node identification.

13. The method of claim 12, wherein identifying the tile includes extracting the tile identification from a geographic database identification using at least one of the segment identification and the node identification.

tion.

14. The method of claim 8, wherein the request includes at least one of a segment identification and a node identification.

15. The method of claim 8, further comprising reading the parcel from the physical storage media.

## Patentansprüche

1. System zum Lokalisieren von geografischen Daten, die in Paketen auf physischen Speichermedien sortiert sind, wobei sich die geografischen Daten in einer geografischen Datenbank befinden, die durch Pakete einer oder mehrerer Kacheln organisiert ist, die durch Linien eines konstanten Breitengrades oder eines konstanten Längengrades in einem Weltkachelraster begrenzt sind, das eine Weltkarte in Kacheln eines konstanten Breitengrades oder eines konstanten Längengrades aufteilt, wobei die geografische Datenbank als eine Sammlung von Paketen derart organisiert ist, dass die Daten in der geografischen Datenbank paketweise auf dem physischen Speichermedium gespeichert sind, wobei jedes Paket eine Paketgrenze aufweist, die basierend auf dem Weltkachelraster definiert ist, und wobei jedes Paket die Daten für eine oder mehrere Kacheln in dem Weltkachelraster enthält, wobei das System Folgendes umfasst:

eine Softwareanwendung, die konfiguriert ist, um eine Anforderung für geografische Daten zu empfangen, wobei die Anforderung Informationen beinhaltet, die die Softwareanwendung verwendet, um eine Kachel in dem Weltkachelraster zu identifizieren, die die angeforderten geografischen Daten enthält, und um eine Kachelidentifikation dieser Kachel zu erhalten;
einen räumlichen Index, der als zweidimensionale, dünnbesetzte Matrix organisiert ist, die durch die Zeile und Spalte einer Kachel in dem Weltkachelraster indiziert ist, wobei jeder Eintrag in dem räumlichen Index eine Medienadresse des Pakets ist, das die entsprechende Kachel enthält, wobei die Softwareanwendung konfiguriert ist, um die Kachelidentifikation zu dem räumlichen Index bereitzustellen, und der räumliche Index konfiguriert ist, um die Kachelidentifikation zu verwenden, um eine Zeile und eine Spalte zu identifizieren, die der Kachel zugeordnet sind, und wobei der räumliche Index konfiguriert ist, um die Zeile und die Spalte zu verwenden, um einen Paketort an der entsprechenden Medienadresse auf dem physischen Speichermedium zu identifizieren, das die angeforderten geografischen Daten enthält, die in der entsprechenden erforderlichen Kachel enthalten sind.

2. System nach Anspruch 1, wobei die Informationen, die die Softwareanwendung verwendet, um die Kachel zu identifizieren, Daten beinhalten, die einer aktuellen Position eins Fahrzeugs zugeordnet sind.

3. System nach Anspruch 2, wobei die Daten, die der aktuellen Position des Fahrzeugs zugeordnet sind, geografische Koordinaten der Fahrzeugposition beinhalten.

4. System nach Anspruch 2, wobei die Daten, die der aktuellen Position des Fahrzeugs zugeordnet sind, eine Segmentidentifikation und/oder eine Knotenidentifikation beinhalten.

5. System nach Anspruch 1, wobei die Informationen, die die Softwareanwendung verwendet, um die Kachel zu identifizieren, eine Segmentidentifikation und/oder eine Knotenidentifikation beinhalten.

6. System nach Anspruch 1, wobei der räumliche Index ein einzelnes Zeilenpaket und wenigstens ein Spaltenpaket beinhaltet.

7. System nach Anspruch 6, wobei das Zeilenpaket und das wenigstens eine Spaltenpaket einen Zellkopf, eine erste Matrix und eine zweite Matrix beinhalten, wobei die erste Matrix ein Vorhandensein von Einträgen in der zweiten Matrix anzeigt.

8. Verfahren zum Lokalisieren von geografischen Daten, die in Paketen auf physischen Speichermedien gespeichert sind, wobei das Verfahren durch eine Softwareanwendung durchgeführt wird, wobei sich die geografischen Daten in einer geografischen Datenbank befinden, die durch Pakete einer oder mehrerer Kacheln organisiert ist, die durch Linien eines konstanten Breitengrades und eines konstanten Längengrades in einem Weltkachelraster begrenzt sind, das eine Weltkarte in Kacheln eines konstanten Breitengrades und eines konstanten Längengrades aufteilt, wobei die geografische Datenbank als eine Sammlung von Paketen derart organisiert ist, dass die Daten in der geografischen Datenbank paketweise auf dem physischen Speichermedium gespeichert sind, wobei jedes Paket eine Paketgrenze aufweist, die basierend auf dem Weltkachelraster definiert ist, und wobei jedes Paket die Daten für eine oder mehrere Kacheln in dem Weltkachelraster enthält, wobei das Verfahren Folgendes umfasst:

Empfangen einer Anforderung für geografische Daten, wobei die Anforderung Informationen beinhaltet, die eine Kachel in dem Weltkachelraster identifizieren, die die angeforderten geografischen Daten enthält;

Identifizieren einer Kachel, die die angeforderten geografischen Daten enthält, und Erhalten einer Kachelidentifikation dieser Kachel, wobei die Kachelidentifikation der Zeile und der Spalte der erforderlichen Kachel in dem Weltkachelraster zugeordnet ist; und

Abrufen einer Medienadresse für ein Paket, das die entsprechende Kachel enthält, unter Verwendung eines räumlichen Index, der als eine zweidimensionale, dünnbesetzte Matrix organisiert ist, die durch die Zeile und die Spalte der Kachel in dem Weltkachelraster indiziert ist, wobei die Zeile und die Spalte, die der erforderlichen Kachel zugeordnet sind, von der Kachelidentifikation erhalten werden.

9. Verfahren nach Anspruch 8, wobei die Anforderung Daten beinhaltet, die einer aktuellen Position eines Fahrzeugs zugeordnet sind.

10. Verfahren nach Anspruch 9, wobei die Daten, die der aktuellen Position des Fahrzeugs zugeordnet sind, geografische Koordinaten der Fahrzeugposition beinhalten.

11. Verfahren nach Anspruch 10, wobei das Identifizieren der Kachel ein Übersetzen der geografischen Koordinaten der Fahrzeugposition beinhaltet, um die Kachelidentifikation zu erhalten.

12. Verfahren nach Anspruch 9, wobei die Daten, die der aktuellen Position des Fahrzeugs zugeordnet sind, eine Segmentidentifikation und/oder eine Knotenidentifikation beinhalten.

13. Verfahren nach Anspruch 12, wobei das Identifizieren der Kachel ein Extrahieren der Kachelidentifikation aus einer geografischen Datenbankidentifikation unter Verwendung der Segmentidentifikation und/oder der Knotenidentifikation beinhaltet.

14. Verfahren nach Anspruch 8, wobei die Anforderung eine Segmentidentifikation und/oder eine Knotenidentifikation beinhaltet.

15. Verfahren nach Anspruch 8, ferner umfassend ein Lesen des Pakets aus den physischen Speichermedien.

**Revendications**

1. Système de localisation de données géographiques stockées en paquets sur des supports de stockage physiques, dans lequel les données géographiques se trouvent dans une base de données géographiques qui est organisée en paquets d'une ou de plusieurs mosaïques délimitées par des lignes de latitude constante ou de longitude constante dans une grille de mosaïques mondiale segmentant une carte du monde en mosaïques de latitude constante ou de longitude constante, dans lequel la base de données géographiques est organisée en un ensemble de paquets, de sorte que les données de la base de données géographiques soient stockées sur le support de stockage physique par paquet, dans lequel chaque paquet a une limite de paquet définie sur la base de la grille de mosaïques mondiale, et dans lequel chaque paquet contient les données pour une ou plusieurs mosaïques dans la grille de mosaïques mondiale, le système comprenant :

une application logicielle configurée pour recevoir une demande de données géographiques, dans lequel la demande comprend des informations que l'application logicielle utilise pour identifier une mosaïque dans la grille de mosaïques mondiale contenant les données géographiques demandées et pour obtenir une identification de mosaïque de cette mosaïque ;

un index spatial organisé sous la forme d'un tableau fragmenté bidimensionnel indexé par une rangée et une colonne de mosaïque dans la grille de mosaïques mondiale, dans lequel chaque entrée dans l'index spatial est une adresse multimédia du paquet contenant la mosaïque correspondante, dans lequel l'application logicielle est configurée pour fournir l'identification de mosaïque à l'index spatial et l'index spatial est configuré pour utiliser l'identification de mosaïque pour identifier une ligne et une colonne associées à la mosaïque, dans lequel l'index spatial est configuré pour utiliser la ligne et la colonne afin d'identifier un emplacement du paquet à l'adresse de support correspondante sur le support de stockage physique contenant les données géographiques demandées présentes dans la mosaïque requise correspondante.

2. Système selon la revendication 1, dans lequel les informations que l'application logicielle utilise pour identifier la mosaïque comprennent des données associées à une position actuelle d'un véhicule.

3. Système selon la revendication 2, dans lequel les données associées à la position actuelle du véhicule comprennent les coordonnées géographiques de la position du véhicule.

4. Système selon la revendication 2, dans lequel les données associées à la position actuelle du véhicule comprennent au moins une identification de segment et une identification de nœud.

5. Système selon la revendication 1, dans lequel les informations que l'application logicielle utilise pour identifier la mosaïque comprennent une identification de segment et/ou une identification de nœud.

6. Système selon la revendication 1, dans lequel l'index spatial comprend un seul paquet de rangées et au moins un paquet de colonnes.

7. Système selon la revendication 6, dans lequel le paquet de lignes et l'au moins un paquet de colonnes comprennent un en-tête, un premier tableau et un second tableau, dans lequel le premier tableau indique la présence d'entrées dans le second tableau.

8. Procédé de localisation de données géographiques stockées en paquets sur des supports de stockage physiques, le procédé étant exécuté par une application logicielle, dans lequel les données géographiques se trouvent dans une base de données géographiques qui est organisée en paquets d'une ou de plusieurs mosaïques délimitées par des lignes de latitude constante ou de longitude constante dans une grille de mosaïques de monde segmentant une carte du monde en mosaïques de latitude constante ou de longitude constante, dans lequel la base de données géographiques est organisée en un ensemble de paquets, de sorte que les données de la base de données géographiques soient stockées sur le support de stockage physique par paquet, dans lequel chaque paquet a une limite de paquet définie sur la base de la grille de mosaïques mondiale, et dans lequel chaque paquet contient les données pour une ou plusieurs mosaïques dans la grille de mosaïques mondiale, le procédé comprenant :

la réception d'une demande de données géographiques, la demande comprenant des informations identifiant une mosaïque dans la grille de mosaïques mondiale qui contient les données géographiques demandées ;

l'identification d'une mosaïque qui contient les données géographiques demandées et l'obtention d'une identification de mosaïque de cette mosaïque, dans lequel l'identification de mosaïque est associée à la ligne et à la colonne de la mosaïque requise dans la grille de mosaïques mondiale ; et

la récupération d'une adresse de support pour un paquet contenant la mosaïque correspondante à l'aide d'un index spatial organisé sous la forme d'un tableau fragmenté bidimensionnel indexé par la ligne et la colonne de la mosaïque dans la grille de mosaïques mondiale, dans lequel la ligne et la colonne associées à la mosaïque requise sont obtenues à partir de l'identification de mosaïque.

9. Procédé selon la revendication 8, dans lequel la demande comprend des données associées à une position actuelle d'un véhicule.

**10.** Procédé selon la revendication 9, dans lequel les données associées à la position actuelle du véhicule comprennent des coordonnées géographiques de la position du véhicule.

**11.** Procédé selon la revendication 10, dans lequel l'identification de la mosaïque comprend la traduction des coordonnées géographiques de la position du véhicule pour obtenir l'identification de mosaïque.

**12.** Procédé selon la revendication 9, dans lequel les données associées à la position actuelle du véhicule comprennent au moins une identification de segment et une identification de nœud.

**13.** Procédé selon la revendication 12, dans lequel l'identification de la mosaïque comprend l'extraction de l'identification de mosaïque d'une identification de base de données géographiques à l'aide de l'identification de segment et/ou de l'identification de nœud.

**14.** Procédé selon la revendication 8, dans lequel la demande comprend une identification de segment et/ou une identification de nœud.

**15.** Procédé selon la revendication 8, comprenant en outre la lecture du paquet à partir du support de stockage physique.

**FIG. 1**

PROCESSOR 102

APPLICATIONS 200

MAP ACCESS
APPLICATION 202

MAP UPDATE
APPLICATION 204

VEHICLE POSITIONING
APPLICATION 206

ELECTRONIC HORIZON
APPLICATION 208

INTERFACE
APPLICATION 210

OTHER APPLICATIONS 212

# FIG. 2

106

## SEGMENT DATA ATTRIBUTES 300

### SEGMENT IDENTIFICATION 302

### CONTROL POINTS 304

### DIRECTION OF TRAVEL 306

### SPEED CATEGORY 308

### LANE CATEGORY 310

### ROAD TYPE 312

### SEGMENT CHARACTERISTICS 314

### ACCESS CHARACTERISTICS 316

### OTHER ATTRIBUTES 318

## FIG. 3

16,384 Tiles

8,192 Tiles

400

402

-90.0, -180.0

FIG. 4

EP 2 175 385 B1

**FIG. 5**

**FIG. 6**

# FIG. 7

616

DATABASE HEADER 706

SPATIAL INDEX PARCEL HEADER 708

ENTRY BITMAP 710

MEDIA ADDRESS ARRAY 712

ROW PARCEL

702

SPATIAL INDEX PARCEL HEADER 708

ENTRY BITMAP 710

MEDIA ADDRESS ARRAY 712

COLUMN PARCEL, m

704

PARCEL 500

SPATIAL INDEX PARCEL HEADER 708

ENTRY BITMAP 710

MEDIA ADDRESS ARRAY 712

COLUMN PARCEL, n

704

PARCEL 500

· · ·

EP 2 175 385 B1

18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060100780 A

- US 6405128 B